# EUROPEAN PATENT APPLICATION

(11) **EP 3 770 557 A1**
(43) Date of publication of application: **27.01.2021**
(21) Application number: 19187528.5
(22) Date of filing: 22.07.2019
(51) Int. Cl.: G01C 21/36, G06Q 10/02, G06Q 50/12

(54) **RECOMMENDATION ENGINE FOR SIGHTS, EVENTS AND PLACES ALONG ROUTE FROM A TO B**

(71) Applicant: Bayerische Motoren Werke Aktiengesellschaft, 80809 München (DE)
(72) Inventor: Beste, Fabian, 80798 München (DE)

(57) **Abstract**

Given a computer-implemented method, it is an objective of the present invention to provide a method for automatically providing information on vehicle surroundings. The objective is solved by the method comprising steps: receive (202) a signal indicating a route, the route having a geographical start location (A) and a geographical end location (B); calculate (204) corridor data indicating a geographical border area (105) along the route; based on the corridor data, and at least on geographical locations of a plurality of points of interest, determine (206) points of interest as selected points of interest; calculate (208) a geofence border indicating a geographical area surrounding each point of interest of the selected points of interest (POIs); receive (209) a signal indicating the location of the vehicle; and based on the location of the vehicle, determine (210) if the vehicle passes the geofence border, and if so: determine which point of interest the passed geofence border relates to as passed point of interest; and provide user with information on the point of interest the passed geofence relates to.

## Description

The inventor has realized, that with increasingly autonomous driving vehicles, passenger may have less attention on the road and the traffic, and may instead move attention to the landscape, the passing surrounding, to events around the vehicle.

The inventor has further realized that there might be a demand for a method, a system, and a storage medium for automatically providing information on points of interest along a planned route.

Current systems may provide content that is not context based, i.e. does not relate to the location of the vehicle and/or to a planned route.

In particular, the deficiency is solved by a computer-implemented method for automatically providing information on vehicle surroundings, the method comprising steps:
a) receive a signal indicating a route, the route having a geographical start location and a geographical end location;
b) calculate corridor data indicating a geographical border area along the route;
c) based on the corridor data, and at least on geographical locations of a plurality of points of interest, determine points of interest as selected points of interest;
d) calculate a geofence border indicating a geographical area surrounding each point of interest of the selected points of interest;
e) receiving a signal indicating the location of the vehicle; and
f) based on the location of the vehicle, determine if the vehicle passes the geofence border; if so:
   i. determine which point of interest the passed geofence border relates to as passed point of interest; and
   ii. provide user with information on the point of interest the passed geofence relates to.

Advantages of the method includes an automatic information providing system for a vehicle that is context aware, i.e. that can provide information related to the location of the vehicle. The method is particular advantageous for providing information to passenger in autonomous vehicle, but is not limited to autonomous driving vehicles.

A route may be provided by a navigation system. Route may also be anticipated while driving based on known locations for the passengers and/or on frequently visited locations and a direction of driving.

Typically, selected points of interest are determined based on if they are located within the corridor defined by the corridor data. This may be done by relying on geographical locations the points of interest. Selected points of interest within the certain corridor area may be received by sending a request to an API of a content providers, such as google. The content provider may respond with points of interest that are located within the specified corridor. The information on the selected points of interest may also be received using an API of a content provider.

A "geofence" is a virtual perimeter for a real-world geographical location or area.

In one embodiment, step a) further comprises:
a1) send a signal providing a passenger of the vehicle with a question if points of interest information should be provided during the route; and
a2) receive a signal indicating a response from the passenger;
a3) conditional at least on the signal indicating the response from the passenger, proceed with the method steps.

The question may not be provided every time the method is executed, but the method may instead further include learning if the passenger or driver wants to receive information on points of interest based on previous interactions, e.g. if the passenger always indicates that information is desired, then the amount of information generated during each route may be increased.

The method may also be executed with certain intervals, i.e. not every route. In this case, if the passenger always indicated that information is desired, then provided the frequency of executing the method will be increased.

In one embodiment, the method further comprises:
for at least the passed points of interest, receive a signal indicating information on the passed points of interest; and
wherein the signal indicating information is preferably received in response to step c) or in response to step f.i).

In one embodiment, the information on the point of interest is provided to a/the passenger as text in a display; or
wherein the information on the point of interest is provided as a voice message in at least one loudspeaker of the vehicle, preferably by transforming a received signal indicating information on the passed points of interest from text data to sound data.

The information may also be provided as augmented reality, such as by projecting information in the windows of the vehicle.

In one embodiment, step f) further includes:
in response to step f.ii),
store an indication that information has already been provided for the passed point of interest; and
determine in step f.i) further includes determine if information has already been provided for the passed point of interest; and
conditional on if information has already been provided for the passed point of interests, provide user with information on the point of interest.

For static points of interest (i.e. those that are stationary) the information may not be provided again. It may also be provided again, if sufficient time has passed. For dynamic event (i.e. those only available for a limited time) information about new events may be provided if the same passage are travelled a second time.

The information method may also be blocked under certain circumstances, such as if the user explicitly turns it off. It may also be temporarily blocked while attention of a driver is needed on the traffic for security reasons, such as while parking, during bad weather, or heavy traffic. The method may also be blocked while the phone is in use.

The method may also be blocked if the vehicle determines that the route has been travelled before, such as by comparing the current route with previous routes (e.g. new navigation target entered), or by determine that the driver is taking the vehicle to a familiar place, such as home or office. In this case the method may be unblocked if the vehicle determines that a new passengers (e.g. a new driver) is in the vehicle, either by new profile setting, or by new seating position.

The method may also be blocked for shorter routes (such as routes shorter than 30min).

In one embodiment, step c) further includes filter the selected points of interest, preferably based on popularity and/or relevance score.

In one embodiment, step f) further includes:
iii) deterring if the point of interest allows subsequent actions such as restaurant reservation; and if so;
iv) send a signal providing the passenger with options on the subsequent actions.

In one embodiment, step c) further includes filter the selected points of interest based on passenger preference categories; wherein the categories may be preferably is be one or more of:
cultural sites, historical sites, concert venues, festival venues, sport venues, landmarks, mountains.

The categories may be based on user preferences that may be entered by the user adjusting settings of the vehicle, the categories may also be learnt based on previous interaction, such as a passenger liking or interacting with a provided point of interest.

In one embodiment, method further comprises:
determine a geofence border of the geographical end locations, and;
adjust the categories based on the vehicle passing the geofence border of the geographical end location.

Typically, practical information, such as parking locations, is provided after the vehicle has passed the geofence border of the geographical end location.

After the vehicle has passed the geofence border of the geographical end location, summarized information on the points of interest in the surroundings (e.g. top restaurants, venues, events) may also be provided to the passengers, such as on a graphical display.

Selected points of interest at the end location may be determined based on the corridor data. Selected points of interest at the end location may also be determined based on an end location area (such as a circle) surrounding the end location. The end location area may cover an area that includes the geographical locations of points of interest outside the corridor, thereby providing further information to the passengers on the surroundings at the end location.

Alternatively, or additionally, the size of the end location area may be adjustable by a passenger.

In one embodiment, step c) further includes:
receive a signal with news articles, the news articles indicating a geographical location corresponding to the corridor data; and
including the news article in the selected points of interest.

News may also be searched based points of interest, and provided as information to a point of interest. This may be done by searching keywords on news articles. In one embodiment, a border distance of the geographical border area is dependent on a corresponding route passage being in an urban region or in a rural region.

In one embodiment, the method further comprises:
c1) determine the number of points of interest in the selected points of interest;
c2) based on the number of points of interest per distance unit of the route, and/or per estimated time unit of the route, adjust a/the border distance of the geographical border area to calculate adjusted corridor data;
c3) determine selected points of interest based on the adjusted corridor data.

In one embodiment, an area within the geofence border of each of the selected points is at least large enough to cover at least some part of the route.

The deficiency is further solved by a data processing system comprising means for carrying out the steps of the herein described methods.

The deficiency is further solved by a computer-readable medium comprising instructions which, when executed by a computer, cause the computer to carry out the steps of the herein described methods.

The benefits and advantages of the system and the medium are equal or similar to the advantages of the above-mentioned method.

In the following, embodiments of the invention are described with respect to the figures, wherein
- Fig. 1: shows a planned route;
- Fig. 2: shows a method according to the present disclosure;

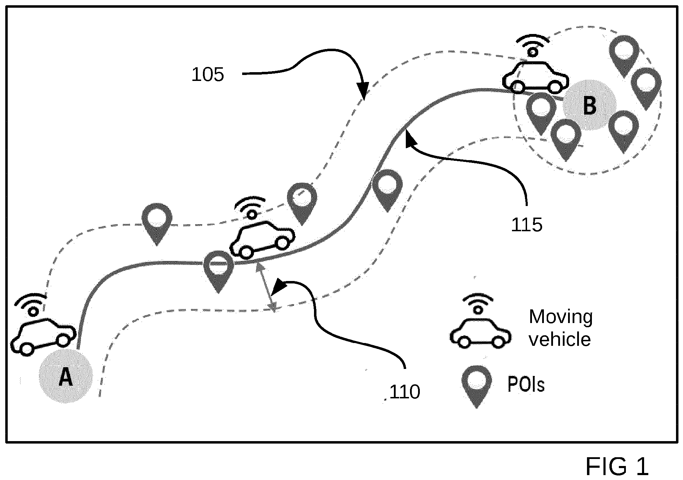

Fig. 1 shows a planned route 115 including a geographical start location A and a geographical end location B. The figure further depicts a geographical border area 105 of a corridor along the route 115, wherein the border of the geographical border area 105 is located at a border distance 110 from the route 115.

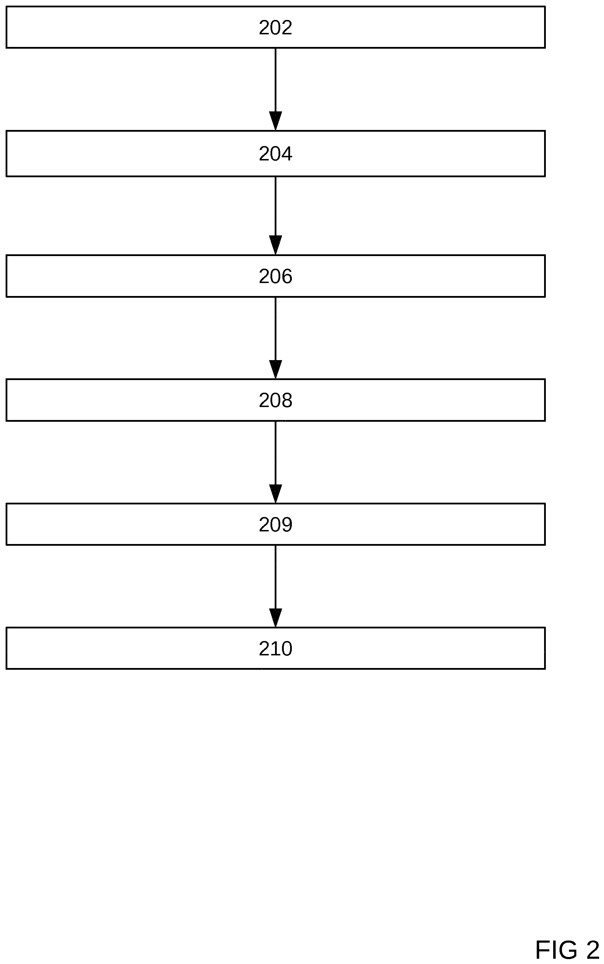

Fig. 2 shows a computer-implemented method for automatically providing information on vehicle surroundings. The method includes receive 202 a signal indicating a route 115, the route having a geographical start location A and a geographical end location B; calculate 204 corridor data indicating a geographical border area along the route; based on the corridor data, and at least on geographical locations of a plurality of points of interest, determine 206 points of interest as selected points of interest; calculate 208 a geofence border indicating a geographical area surrounding each point of interest of the selected points of interest; receive 209 a signal indicating the location of the vehicle, and based on the location of the vehicle determine 210 if the vehicle passes the geofence border, and if so: determine which point of interest the passed geofence border relates to as passed point of interest; and provide user with information on the point of interest the passed geofence relates to.

## Claims

1. A computer-implemented method for automatically providing information on vehicle surroundings, the method comprising steps:
a) receive (202) a signal indicating a route, the route having a geographical start location (A) and a geographical end location (B);
b) calculate (204) corridor data indicating a geographical border area (105) along the route;
c) based on the corridor data, and at least on geographical locations of a plurality of points of interest, determine (206) points of interest as selected points of interest;
d) calculate (208) a geofence border indicating a geographical area surrounding each point of interest of the selected points of interest (POIs);
e) receive (209) a signal indicating the location of the vehicle; and
f) based on the location of the vehicle, determine (210) if the vehicle passes the geofence border, and if so:
i. determine which point of interest the passed geofence border relates to as passed point of interest; and
ii. provide user with information on the point of interest the passed geofence relates to.

2. The method of claim 1,
wherein step a) further comprises:
a1) send a signal providing a passenger of the vehicle with a question if points of interest information should be provided during the route; and
a2) receive a signal indicating a response from the passenger;
a3) conditional at least on the signal indicating the response from the passenger, proceed with the method steps.

3. The method of claim 1 or claim 2,
wherein the method further comprises:
for at least the passed points of interest, receive a signal indicating information on the passed points of interest; and
wherein the signal indicating information is preferably received in response to step c) or in response to step f.i).

4. The method of any of the preceding claims;
wherein the information on the point of interest is provided to a/the passenger as text in a display; or
wherein the information on the point of interest is provided as a voice message in at least one loudspeaker of the vehicle, preferably by transforming a received signal indicating information on the passed points of interest from text data to sound data.

5. The method of any of the preceding claims;
wherein step f) further includes:
in response to step f.ii),
store an indication that information has already been provided for the passed point of interest; and
determine in step f.i) further includes determine if information has already been provided for the passed point of interest; and
conditional on if information has already been provided for the passed point of interests, provide user with information on the point of interest.

6. The method of any of the preceding claims;
wherein step c) further includes filter the selected points of interest, preferably based on popularity and/or relevance score.

7. The method of any of the preceding claims;
wherein step f) further includes:
iii) deterring if the point of interest allows subsequent actions such as restaurant reservation; and if so;
iv) send a signal providing the passenger with options on the subsequent actions.

8. The method of any of the preceding claims;
wherein step c) further includes filter the selected points of interest based on
passenger preference categories; wherein the categories may be preferably is be one or more of:
cultural sites, historical sites, concert venues, festival venues, sport venues, landmarks, mountains, and/or temporary events such as a football game.

9. The method of claim 8,
the method further comprises:
determine a geofence border of the geographical end locations (B), and;
adjust the categories based on the vehicle passing the geofence border of the geographical end location (B).

10. The method of any of the preceding claims;
wherein step c) further includes:
receive a signal with news articles, the news articles indicating a geographical location corresponding to the corridor data; and
including the news article in the selected points of interest.

11. The method of any of the preceding claims;
wherein a border distance (110) of the geographical border area (105) is dependent on a corresponding route passage being in an urban region or in a rural region.

12. The method of any of the preceding claims;
wherein the method further comprises:
c1) determine the number of points of interest in the selected points of interest;
c2) based on the number of points of interest per distance unit of the route, and/or per estimated time unit of the route, adjust a/the border distance (110) of the geographical border area (105) to calculate adjusted corridor data;
c3) determine selected points of interest based on the adjusted corridor data.

13. The method of any of the preceding claims;
wherein an area within the geofence border of each of the selected points is at least large enough to cover at least some part of the route.

14. A data processing system comprising means for carrying out the steps of the method of one of the preceding claims.

15. A computer-readable medium comprising instructions which, when executed by a computer, cause the computer to carry out the steps of the method of one of the claims 1 to 13.
